# EUROPEAN PATENT SPECIFICATION

(11) **EP 2 703 631 B1**
(45) Date of publication and mention of the grant of the patent: **11.08.2021**
(21) Application number: 12182620.0
(22) Date of filing: 31.08.2012
(51) Int. Cl.: F02F 1/24

(54) **Injector configuration of a cylinder head of a dual fuel internal combustion engine**
Injektorkonfiguration eines Zylinderkopfes eines Verbrennungsmotors mit zweifachem Brennstoff
Configuration d'injecteur d'une culasse d'un moteur à combustion interne à double carburant

(43) Date of publication of application: 05.03.2014
(73) Proprietor: Caterpillar Motoren GmbH & Co. KG, 24159 Kiel (DE)
(72) Inventor: Langschwager, Ingo, 21684 Stade (DE); Abraham, Volker, 24159 Kiel (DE); Janzen, Jan, 24145 Kiel (DE)
(74) Representative: BRP Renaud & Partner mbB Rechtsanwälte Patentanwälte Steuerberater

(56) References cited:
- WO-A1-2007/110232
- FR-A1- 2 883 046
- US-A- 4 966 103
- US-A- 5 271 357
- US-A1- 2008 236 546
- None

## Description

### Technical Field

The present invention refers to a cylinder head of an internal combustion engine and more particularly to an injector configuration within a cylinder head of a dual fuel internal combustion engine.

### Background

A dual fuel internal combustion engine can typically operate in a liquid fuel mode and in a gaseous fuel mode. In the liquid fuel mode a liquid fuel, such as diesel fuel, is injected directly into an engine cylinder or a pre-combustion chamber as the sole source of energy during combustion. In a gaseous fuel mode a gaseous fuel, such as natural gas, is mixed with air in an intake port of a cylinder and a small amount of liquid fuel is injected into the cylinder or the pre-combustion chamber in order to ignite the mixture of air and gaseous fuel.

For small dual fuel internal combustion engines, a sole liquid fuel injector may be used for injecting liquid fuel in liquid fuel mode and to inject liquid fuel used as ignition fuel in gaseous fuel mode.

For large dual fuel internal combustion engines, the difference between relatively small portions of liquid fuel for ignition in gaseous fuel mode and relatively large portions of liquid fuel in liquid fuel mode is considerable large. A sole fuel injector may not be capable to inject both a relatively small portion of liquid fuel in gaseous fuel mode and a relatively large portion of liquid fuel in liquid fuel mode.

An example for a dual gas-liquid fuel engine is disclosed in US 4,966,103 A. A cylinder head of the engine may comprise a fuel injection nozzle disposed general on the cylinder head axis and torch cell assemblies disposed in an outer circumferential region of the cylinder head. The torch cell assemblies may be arranged inclined relative to the fuel injection nozzle. In each torch cell, an injector may be provided. Said injector may inject ignition fuel into an ignition chamber of the respective torch cell assembly. In addition, said injector of the torch cell includes a spigot or nozzle extending into a passageway. Said injector is disposed slightly askew and angularly positioned relative to the co-axial cylinder head and a cavity formed therein so that the passageway enters the cavity slightly off of being tangential thereto.

Further examples of internal combustion engines including more than one fuel injector per cylinder are disclosed in US 2008/0236546 A1, FR 2 883 046 A1, WO 2007/110232 A, and US 5,272,357 A.

The present invention is directed, at least in part, to improving or overcoming one or more aspects of prior systems.

### Summary of the Invention

According to an aspect of the present invention, a cylinder head of a dual fuel internal combustion engine is configured in accordance with claim 1.

According to another aspect of the present invention, a method for manufacturing a cylinder head of a dual fuel internal combustion engine comprises the method steps of claim 4.

Other features and aspects of this invention will be apparent from the following description and the accompanying drawings.

### Brief Description of the Drawings

Fig. 1 shows a schematic drawing of a combustion zone face of a cylinder head of a dual fuel internal combustion engine;
Fig. 2 is a schematic cut view of a cylinder unit of a dual fuel internal combustion engine; and
Fig. 3 is a schematic cut view of a detailed view of a cylinder head of a dual fuel internal combustion engine.

### Detailed Description

The following is a detailed description of exemplary embodiments of the present invention. The exemplary embodiments described therein and illustrated in the drawings are intended to teach the principles of the present invention, enabling those of ordinary skill in the art to implement and use the present invention in many different environments and for many different applications. Therefore, the exemplary embodiments are not intended to be, and should not be considered as, a limiting description of the scope of patent protection. Rather, the scope of patent protection shall be defined by the appended claims.

The present invention may be based in part on the realization that a dual fuel internal combustion engine operable in a liquid fuel mode and in a gaseous fuel mode may have one or more cylinders, each cylinder having a first fuel injector for injecting relatively large portions of liquid fuel in liquid fuel mode and a second fuel injector for injecting relatively small amounts of liquid fuel for ignition of a compressed gaseous fuel air mixture within the cylinder in gaseous fuel mode.

As the combustion chamber within the cylinder is designed to facilitate an even distribution and combustion, it is desirable to supply liquid fuel to the same ignition region in the combustion zone by the first fuel injector in liquid fuel mode and the second fuel injector in gaseous fuel mode. For example, a combustion zone face of a reciprocating piston within a cylinder and a combustion zone face of a cylinder head are designed such that fuel and air may evenly distribute in the combustion zone generating a homogenous flame front avoiding hot spots that may cause knocking and other effects that may negatively affect the combustion.

Accordingly, a cylinder head is disclosed that allows arranging a first fuel injector and a second fuel injector such that injection and ignition of liquid fuel of both the first fuel injector and the second fuel injector may be located in the same ignition region of a combustion chamber.

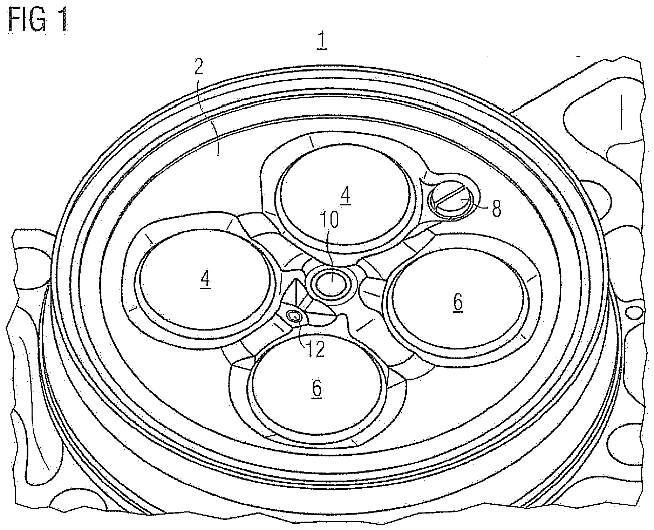

An exemplary embodiment of a cylinder head 1 is described in the following with reference to Fig. 1 showing a view on a combustion zone 2 of cylinder head 1.

Cylinder head 1 comprises inlet valves 4, outlet valves 6, and a starter valve 8.

Inlet valves 2 are fluidly connected to an air intake system. The air intake system may comprise at least one air intake, for example, one for each cylinder of the dual fuel internal combustion engine. The at least one air intake may be fluidly connected to a gaseous fuel supply system via at least one gaseous fuel admission valve.

Outlet valves 4 are connected to an exhaust gas system. The exhaust gas system may comprise a particle filter, an exhaust gas recirculation line connected to the air intake system and/or a catalyst, for example, a SCR catalyst and/or an oxidation catalyst.

Air intake system and exhaust gas system may be configured as a single-stage or two-stage turbo charged system.

Other embodiments of cylinder head 1 may comprise another quantity of inlet valves 4 and outlet valves 6, respectively.

Cylinder head 1 comprises a combustion zone face 2. Combustion zone face 2 is directed to a reciprocating piston within a cylinder. Combustion zone face 2 comprises a first injector tip outlet 10 and a second injector tip outlet 12. First injector tip outlet 10 and second injector tip outlet 20 are outlets of a first injector mounting opening and a second injector mounting opening, respectively, as is described in greater detail in the following.

In some embodiments, cylinder head 1 may further comprise at least one sensor (not shown) configured to sense an operation condition of the cylinder such as pressure and/or temperature. The at least one sensor may be connected to a control unit, for example, an electronic control module (ECM) controlling operation of the dual fuel internal combustion engine.

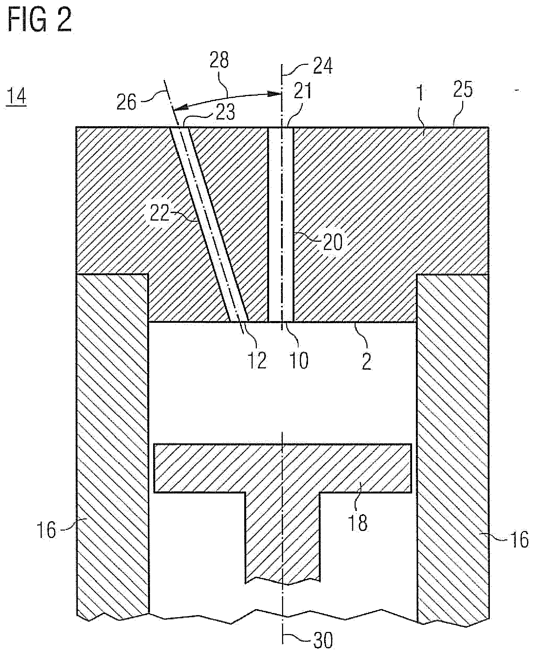

An exemplary embodiment of cylinder head 1 is described in the following with reference to Fig. 2.

A cylinder unit 14 of a dual fuel internal combustion engine comprises a cylinder liner 16, a piston 18, and cylinder head 1.

Cylinder liner 16 may be arranged within an engine block. The engine block may comprise at least one cylinder unit 14.

Piston 18 is arranged to reciprocate within cylinder liner 16 during operation of the dual fuel internal combustion engine.

Cylinder liner 16, cylinder 14, cylinder head 1 and piston 18 may comprise a common central longitudinal axis 30. During operation of the dual fuel internal combustion engine, piston 18 reciprocates along central longitudinal axis 30.

Cylinder head 1 is mounted onto cylinder liner 16, for example, via a plurality of bolts (not shown). Cylinder head 1 comprises combustion zone face 2 directed to reciprocating piston 18 and a cover face 25. Cover face 25 is opposed to combustion zone face 2. Cover face 25 may be adapted to receive a cylinder cover.

Cylinder head 1 comprises a first injector mounting opening 20 extending through cylinder head 1 along a first axis 24 from a first injector inlet 21 in cover face 25 to a first injector tip outlet 10 in combustion zone face 2.

Cylinder head 1 further comprises a second injector mounting opening 22 extending through cylinder head 1 along a second axis 26 from a second injector inlet 26 in cover face 25 to a second injector tip outlet 12 in combustion zone face 2.

First injector mounting opening 20 is adapted to receive a first fuel injector. First injector mounting opening 20 may comprise a plurality of sections along its length having different diameters and/or shapes.

Similarly, second injector mounting opening 22 is adapted to receive a second fuel injector. Second injector mounting opening 22 may comprise a plurality of sections along its length having different diameters and/or shapes.

First injector mounting opening 20 and second injector mounting opening 22 are provided within cylinder head 1 such that first axis 24 and second axis 26 confine an angle 28. Angle 28 is within the range of 10° to 25°, for example 16°.

In some embodiments, first axis 21 may be parallel to or coaxial to central longitudinal axis 30 as illustrated in Fig. 2.

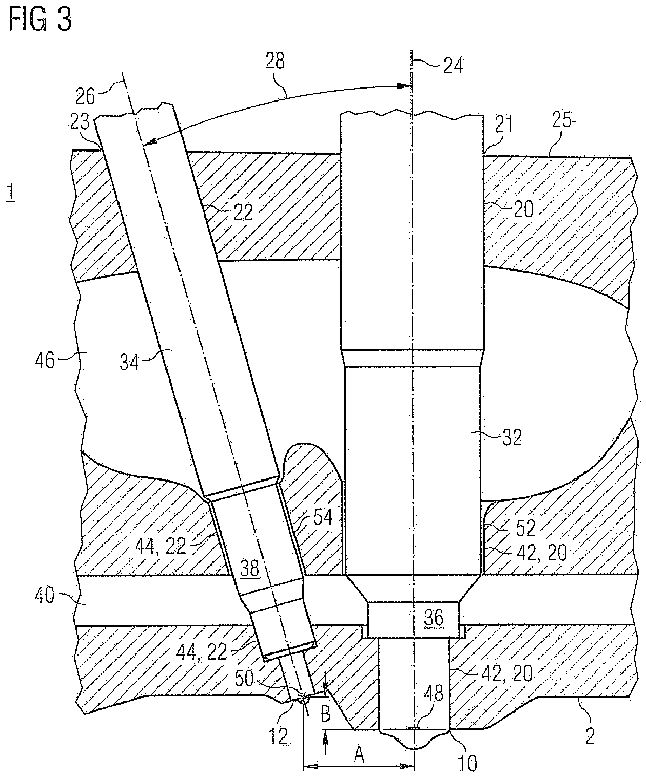

It is noted that although not shown in the schematic cut view of cylinder head 1 in Fig.2, cylinder head 1 may further comprise at least one inlet valve, at least outlet valve, a starter valve, and/or a sensor as already described before with reference to Fig. 1. Cylinder head 1 may comprise further components such as a first fuel injector and a second fuel injector. According to the invention, the cylinder head comprises at least one cooling channel and at least one cooling chamber as will be described hereinafter with reference to Fig. 3.

Turning to Fig. 3, a detailed view of an exemplary embodiment of cylinder head 1 comprising fuel injectors is described in greater detail.

Cylinder head 1 comprises a first fuel injector 32, a second fuel injector 34, a cooling channel 40, and a cooling chamber 46.

First fuel injector 32 is arranged within first injector mounting opening 20. First fuel injector 32 comprises a first fuel injector tip 36 at a front end and directed to the combustion zone. First injector tip 36 is arranged within a first injector tip section 42 of first injector mounting opening 20. First injector tip section 42 is adapted to receive first fuel injector tip 36.

Similarly, second fuel injector 34 is arranged within second injector mounting opening 22. Second fuel injector 34 comprises a second fuel injector tip 38 at a front end and directed to the combustion zone. Second fuel injector tip 38 is arranged within a second injector tip section 44 of second injector mounting opening 22. Second injector tip section 44 is adapted to receive second fuel injector tip 38.

First and second fuel injectors 32, 34 are fluidly connected to a liquid fuel supply system. Further, first and second fuel injectors 32, 34 may be mechanically and/or electronically actuated to inject liquid fuel into cylinder unit 14 upon actuation.

In some embodiments, first and second fuel injector 34, 36 may comprise a housing to protect first and second fuel injector 34, 36 from corrosion and to ease mounting, for example, via a thread.

A control unit may be connected to first and second fuel injector 32, 34 controlling quantity and timing of injection. The control unit may be part of the ECM.

First fuel injector 32 is configured and adapted to inject relatively large quantities of liquid fuel in liquid fuel mode whereas second fuel injector 34 is configured and adapted to inject relatively small quantities of liquid fuel serving as ignition fuel in gaseous fuel mode. In other words, first fuel injector 32 is configured as main injector, and second fuel injector 34 is configured as ignition injector.

In other embodiments, the position of first and second fuel injectors 32, 34, may be switched.

Cooling channel 40 intersects first injector mounting opening 20 and second injector mounting opening 22. Further, cooling channel 40 is adapted to guide cooling liquid such as cooling water around first and second fuel injectors 32, and 34.

Still further, cooling channel 22 may be connected to a cooling system adapted for cooling of the cylinder liner, cylinder head 1, and/or first and second fuel injectors 32, 34.

According to the invention, cooling channel 40 is arranged closer to combustion zone face 2 than to cover face 25 of cylinder head 1. The cooling channel 40 intersects first injector mounting opening 20 in a region within the range of first injector tip section 42 of first injector mounting opening 20 where first fuel injector tip 36 of first fuel injector 32 is arranged in a mounted state. Likewise, cooling channel 40 intersects second injector mounting opening 22 in a region within the range of second injector tip section 44 of second injector mounting opening 22 where second fuel injector tip 38 of second fuel injector 34 is arranged in a mounted state.

Cooling chamber 46 extends within cylinder head 1. First and second injector mounting openings 20, 22 intersect cooling chamber 46. Cooling chamber 46 is fluidly connected to cooling channel 40 via a first fluid passage gap 52 and a second fluid passage gap 54.

First and second fluid passage gaps 52, 54 are gaps between a region of the first injector mounting opening 20 and first injector 32, and second injector mounting opening 22 and second injector 34, respectively.

Cooling chamber 46 and cooling channel 40 may be part of an engine cooling system circulating cooling liquid such as cooling water through various cooling channels and chambers, for example, within the engine block, at least one cylinder liner and/or at least one cylinder head of the dual fuel internal combustion engine.

In the configuration shown in Fig. 3, second injector tip outlet 12 is arranged in a plane perpendicular to the second axis 26 and/or first injector tip outlet 10 is arranged in a plane perpendicular to the first axis 24.

First injector tip outlet 10 extends around a first centre point 50 and second injector tip outlet 12 extends around a second centre point 52.

According to the invention, first centre point 50 and second centre point 52 are spaced from each other in a direction perpendicular to the first axis 24 in a distance A within the range of 40 mm to 60 mm, for example, 51 mm.

According to the invention, first centre point 50 and second centre point 52 are spaced from each other in a direction of the first axis 24 in a distance B within the range of 10 mm to 20 mm, for example 15 mm.

As already described with reference to Fig. 2, first injector mounting opening 20 and second injector mounting opening 22 are provided within cylinder head 1 such that first axis 24 and second axis 26 confine angle 28. Angle 28 is within the range of 10° to 25°, for example 16°.

A dual fuel internal combustion engine may comprise at least one cylinder unit 14. Each cylinder unit 14 comprises at least one cylinder head 1, first fuel injector 32 arranged within the first injector mounting opening 20; and second fuel injector 34 arranged within second injector mounting opening 22.

### Industrial Applicability

In the following the basic operation of the above exemplary embodiment of the injector configuration arranged within cylinder head 1 of cylinder unit 14 of a dual fuel internal combustion engine is described with reference to Figs. 1 to 3.

During normal operation of the dual fuel internal combustion engine in liquid fuel mode, charge air from the air intake system is supplied to cylinder unit 14 via opened inlet valves 4. Piston 16 compresses the charge air within cylinder unit 14 when moving towards combustion zone face 2 of cylinder head 1. Thereby, the temperature of the charge air increases. Liquid fuel is injected in a relatively large quantity by first fuel injector 32 to the compressed hot charge air and ignites itself due to the high pressure and temperature within cylinder unit 14. The initial ignition is located in an ignition region in front of first fuel injector tip 36.

During normal operation of the dual fuel internal combustion engine in gaseous fuel mode, charge air is mixed with gaseous fuel prior supplying to cylinder unit 14 via opened inlet valves 4. Piston 16 compresses the mixture of charge air and gaseous fuel within cylinder unit 14 when moving towards combustion zone face 2 of cylinder head 1. Thereby, the temperature of the mixture increases. Liquid fuel serves as ignition fuel as it is injected in a relatively small quantity by second fuel injector 34 to the compressed hot mixture of charge air and gaseous fuel, and ignites itself due to the high pressure and temperature within cylinder unit 14, similarly to liquid fuel mode.

It is noted that due to the injector configuration of first fuel injector 32 and second fuel injector 34, the ignition region within cylinder unit 14 is the same. The ignition region is located in front of both the first fuel injector tip 36 and second fuel injector tip 38. As described before, the specific injector configuration is based on angle 28, distance A, and distance B. The disclosed configuration ensures that liquid fuel injected in relatively large quantities by first fuel injector 32 in liquid fuel mode ignites in the same ignition region as liquid fuel injected in relatively small quantities by second fuel injector 34 in gaseous fuel mode. Due to the specific design of the inner faces of cylinder unit 14 and the ignition region, a homogenous flame front is generated in both the liquid fuel mode and the gaseous fuel mode.

During operation of the dual fuel internal combustion engine, cylinder head 1 and first and second fuel injector 32, 34 may heat up due to heat transfer caused by the combustion in cylinder unit 14. Cooling liquid flowing through cooling channel 40 and cooling chamber 46 reduce heating up of cylinder head 1 and first and second fuel injector 32, 34. Cooling liquid may be, for example, cooling water, and may be further circulated through other components of the dual fuel internal combustion engine, for example, cylinder liner 16.

In some embodiments, cooling liquid in particularly may flow around first and second fuel injector tip 36, 38 as cooling channel 40 intersects first and second fuel injector tip section 42, 44.

After combustion, the exhaust gas leaves the cylinder unit 14 through opened outlet valves 4 to the exhaust gas system.

The above disclosed cylinder head may be applied to cylinders of dual fuel internal combustion engines in in-line configuration, in V-configuration, in W-configuration, or any other know configuration.

Hereinafter a method for manufacturing cylinder head 1 of the dual fuel internal combustion engine is described.

The method comprises the method step of providing first injector mounting opening 20 extending through cylinder head 1 along first axis 24. First injector mounting opening 20 is adapted to receive first fuel injector 32. Specifically, first injector mounting opening 20 extends through cylinder head 1 along first axis 24 from first injector inlet 21 in cover face 25 to first injector tip outlet 10 in combustion zone face 2. The method further comprises the method step of providing second injector mounting opening 22 extending through cylinder head 1 along second axis 26. Second injector mounting opening 22 is adapted to receive second fuel injector 34. Specifically, second injector mounting opening 22 extends through cylinder head 1 along second axis 26 from second injector inlet 26 in cover face 25 to second injector tip outlet 12 in combustion zone face 2. Second axis 26 and first axis 24 confine an angle 28 within the range of 10° to 25°.

First axis 24 may be parallel to or coaxial to central longitudinal axis 30 of cylinder liner 16.

The method further comprises the method step of providing a cooling channel 40 within cylinder head 1. The cooling channel intersects first injector mounting opening 20 and second injector mounting opening 22.

The method further comprises the method step of providing cooling chamber 46 within cylinder head 1 such that first injector mounting opening 20 and second injector mounting opening 22 intersect cooling chamber 46.

Cylinder head 1 comprises combustion zone face 2, and the method step of providing second injector mounting opening 22 along second axis 26 comprises the method step of providing second injector tip outlet 12 in combustion zone face 2 in a plane perpendicular to second axis 26. Additionally the method step of providing first injector mounting opening 20 along first axis 24 comprises the method step of providing first injector tip outlet 10 in combustion zone face 2 in a plane perpendicular to first axis 24.

The method further comprises the method step of arranging first fuel injector 32 within first injector mounting opening 20 and arranging second fuel injector 34 within second injector mounting opening 22.

Herein, the term "dual fuel internal combustion engine" may refer to internal combustion engines which may be used as main or auxiliary engines of stationary power providing systems such as power plants for production of heat and/or electricity as well as in ships/vessels such as cruiser liners, cargo ships, container ships, tankers, and other vehicles. Fuels for internal combustion engines may include diesel oil, marine diesel oil, heavy fuel oil, alternative fuels or a mixture thereof, and natural gas.

Although the preferred embodiments of this invention have been described herein, improvements and modifications may be incorporated without departing from the scope of the following claims.

## Claims

1. A cylinder head (1) of a dual fuel internal combustion engine, comprising:
- a first injector mounting opening (20) extending through the cylinder head (1) along a first axis (24) and adapted to receive a first fuel injector (32) and comprising a first injector tip section (42);
- a second injector mounting opening (22) extending through the cylinder head (1) along a second axis (26) and adapted to receive a second fuel injector (34) and comprising a second injector tip section (44), the second axis (26) and the first axis (24) confining an angle (28) within the range of 10° to 25°;
- a combustion zone face (2), the combustion zone face (2) having a first injector tip outlet (10) in a plane perpendicular to the first axis (24) and second injector tip outlet (12) in a plane perpendicular to the second axis (26);
wherein the first injector tip outlet (10) extends around a first centre point (48) and the second injector tip outlet (12) extends around a second centre point (50), and
the first centre point (48) and the second centre point (50) are spaced from each other in a direction perpendicular to the first axis (24) within the range of 40 mm to 60 mm, and in a direction of the first axis (24) within the range of 10 mm to 20 mm;
- a cooling chamber (46), the first injector mounting opening (20) and the second injector mounting opening (22) intersecting the cooling chamber (46); and
- a cooling channel (40), the first injector mounting opening (20) and the second injector mounting opening (22) intersecting the cooling channel (40), the first injector tip section (42) and the second injector tip section (44) intersecting the cooling channel (40),

2. The cylinder head (1) of claim 1, wherein the cylinder head (1) is configured for mounting on a cylinder liner (16), the cylinder liner (16) comprising a central longitudinal axis (30), and the first axis (24) is parallel to or coaxial to the central longitudinal axis (30).

3. The cylinder head (1) of any one of the preceding claims, further comprising:
a first fuel injector (32) arranged within the first injector mounting opening (20), and, particularly, configured to inject main fuel; and
a second fuel injector (34) arranged within the second injector mounting opening (22), and, particularly, configured to inject ignition fuel.

4. A method for manufacturing a cylinder head (1) of a dual fuel internal combustion engine, comprising:
providing a cylinder head (1) according to any one of the preceeding claims;
arranging a first fuel injector (32) within the first injector mounting opening (20); and
arranging a second fuel injector (34) within the second injector mounting opening (22).

5. The method of claim 4, wherein the cylinder head (1) is configured for mounting on a cylinder liner (16), the cylinder liner (16) comprising a central longitudinal axis (30), and the first axis (24) is parallel to or coaxial to the central longitudinal axis (30).

## Patentansprüche

1. Zylinderkopf (1) eines Zweistoff-Verbrennungsmotors, umfassend:
- eine erste Injektormontageöffnung (20), die sich durch den Zylinderkopf (1) entlang einer ersten Achse (24) erstreckt und ausgelegt ist, um einen ersten Brennstoffinjektor (32) aufzunehmen, und einen ersten Injektorspitzenabschnitt (42) umfasst;
- eine zweite Injektormontageöffnung (22), die sich durch den Zylinderkopf (1) entlang einer zweiten Achse (26) erstreckt und ausgelegt ist, um einen zweiten Brennstoffinjektor (34) aufzunehmen, und einen zweiten Injektorspitzenabschnitt (44) umfasst, wobei die zweite Achse (26) und die erste Achse (24) einen Winkel (28) innerhalb des Bereichs von 10° bis 25° begrenzen;
- eine Verbrennungszonenfläche (2), wobei die Verbrennungszonenfläche (2) einen ersten Injektorspitzenauslass (10) in einer Ebene senkrecht zu der ersten Achse (24) und einen zweiten Injektorspitzenauslass (12) in einer Ebene senkrecht zu der zweiten Achse (26) aufweist;
wobei sich der erste Injektorspitzenauslass (10) um einen ersten Mittelpunkt (48) erstreckt und sich der zweite Injektorspitzenauslass (12) um einen zweiten Mittelpunkt (50) erstreckt und
der erste Mittelpunkt (48) und der zweite Mittelpunkt (50) in einer Richtung senkrecht zur ersten Achse (24) im Bereich von 40 mm bis 60 mm und in einer Richtung der ersten Achse (24) im Bereich von 10 mm bis 20 mm voneinander beabstandet sind;
- eine Kühlkammer (46), wobei die erste Injektormontageöffnung (20) und die zweite Injektormontageöffnung (22) die Kühlkammer (46) teilen; und
- einen Kühlkanal (40), wobei die erste Injektormontageöffnung (20) und die zweite Injektormontageöffnung (22) den Kühlkanal (40) teilen, wobei der erste Injektorspitzenabschnitt (42) und der zweite Injektorspitzenabschnitt (44) den Kühlkanal (40) teilen,

2. Zylinderkopf (1) nach Anspruch 1, wobei der Zylinderkopf (1) zur Montage an einer Zylinderlaufbuchse (16) konfiguriert ist, wobei die Zylinderlaufbuchse (16) eine Mittellängsachse (30) umfasst und die erste Achse (24) parallel oder koaxial zu der Mittellängsachse (30) ist.

3. Zylinderkopf (1) nach einem der vorstehenden Ansprüche, ferner umfassend:
einen ersten Brennstoffinjektor (32), der innerhalb der ersten Injektormontageöffnung (20) angeordnet ist und insbesondere konfiguriert ist, um Hauptbrennstoff einzuspritzen; und
einen zweiten Brennstoffinjektor (34), der innerhalb der zweiten Injektormontageöffnung (22) angeordnet ist und insbesondere konfiguriert ist, um Zündbrennstoff einzuspritzen.

4. Verfahren zum Herstellen eines Zylinderkopfs (1) eines Zweistoff-Verbrennungsmotors, umfassend:
Bereitstellen eines Zylinderkopfs (1) nach einem der vorstehenden Ansprüche;
Anordnen eines ersten Brennstoffinjektors (32) innerhalb der ersten Injektormontageöffnung (20) und
Anordnen eines zweiten Brennstoffinjektors (34) innerhalb der zweiten Injektormontageöffnung (22).

5. Verfahren nach Anspruch 4, wobei der Zylinderkopf (1) zur Montage an einer Zylinderlaufbuchse (16) konfiguriert ist, wobei die Zylinderlaufbuchse (16) eine Mittellängsachse (30) umfasst und die erste Achse (24) parallel oder koaxial zur Mittellängsachse (30) ist.

## Revendications

1. Culasse de cylindre (1) d'un moteur à combustion interne bicarburant, comprenant :
- une première ouverture de montage d'injecteur (20) s'étendant à travers la culasse de cylindre (1) le long d'un premier axe (24) et conçue pour recevoir un premier injecteur de carburant (32) et comprenant une première section d'extrémité d'injecteur (42) ;
- une deuxième ouverture de montage d'injecteur (22) s'étendant à travers la culasse de cylindre (1) le long d'un deuxième axe (26) et conçue pour recevoir un deuxième injecteur de carburant (34) et comprenant une deuxième section d'extrémité d'injecteur (44), le deuxième axe (26) et le premier axe (24) confinant un angle (28) dans la plage de 10° à 25° ;
- une face de zone de combustion (2), la face de zone de combustion (2) ayant une sortie d'extrémité d'injecteur (10) dans un plan perpendiculaire au premier axe (24) et une deuxième sortie d'extrémité d'injecteur (12) dans un plan perpendiculaire au deuxième axe (26) ;
dans lequel la première sortie d'extrémité d'injecteur (10) s'étend autour d'un premier point central (48) et la deuxième sortie d'extrémité d'injecteur (12) s'étend autour d'un deuxième point central (50), et
le premier point central (48) et le deuxième point central (50) sont espacés l'un de l'autre dans une direction perpendiculaire au premier axe (24) dans la plage de 40 mm à 60 mm, et dans une direction du premier axe (24) dans la plage de 10 mm à 20 mm ;
- une chambre de refroidissement (46), la première ouverture de montage d'injecteur (20) et la deuxième ouverture de montage d'injecteur (22) croisant la chambre de refroidissement (46) ; et
- un canal de refroidissement (40), la première ouverture de montage d'injecteur (20) et la deuxième ouverture de montage d'injecteur (22) croisant le canal de refroidissement (40), la première section d'extrémité d'injecteur (42) et la deuxième section d'extrémité d'injecteur (44) croisant le canal de refroidissement (40),

2. Culasse de cylindre (1) selon la revendication 1, dans laquelle la culasse de cylindre (1) est configurée pour montage sur une chemise de cylindre (16), la chemise de cylindre (16) comprenant un axe longitudinal central (30), et le premier axe (24) est parallèle à ou coaxial à l'axe longitudinal central (30).

3. Culasse de cylindre (1) selon l'une quelconque des revendications précédentes, comprenant en outre :
un premier injecteur de carburant (32) agencé au sein de la première ouverture de montage d'injecteur (20), et, en particulier, configuré pour injecter un carburant principal ; et
un deuxième injecteur de carburant (34) agencé au sein de la deuxième ouverture de montage d'injecteur (22), et, en particulier, configuré pour injecter un carburant d'allumage.

4. Procédé de fabrication d'une culasse de cylindre (1) d'un moteur à combustion interne bicarburant, comprenant :
la fourniture d'une culasse de cylindre (1) selon l'une quelconque des revendications précédentes ;
l'agencement d'un premier injecteur de carburant (32) au sein de la première ouverture de montage d'injecteur (20) ; et
l'agencement d'un deuxième injecteur de carburant (34) au sein de la deuxième ouverture de montage d'injecteur (22).

5. Procédé selon la revendication 4, dans lequel la culasse de cylindre (1) est configurée pour montage sur une chemise de cylindre (16), la chemise de cylindre (16) comprenant un axe longitudinal central (30), et le premier axe (24) est parallèle à ou coaxial à l'axe longitudinal central (30).
